# EUROPEAN PATENT APPLICATION

(11) **EP 2 045 592 A1**
(43) Date of publication of application: **08.04.2009**
(21) Application number: 09000579.4
(22) Date of filing: 26.04.2000
(51) Int. Cl.: G01M 15/00, G01M 17/007

(54) **Vehicle or engine testing apparatus**

(30) Priority: 30.04.1999 JP 12387499; 14.05.1999 JP 13426099; 14.05.1999 JP 13430299
(62) Divisional of application: 00108865.7
(71) Applicant: Horiba, Ltd., Kyoto (JP)
(72) Inventor: Nakanikshi, Hideki, Kyoto (JP); Noguchi, Shinji, Kyoto (JP); Ogawa, Yasuhiro, Kyoto (JP)
(74) Representative: Hoffmann, Jörg Peter

(57) **Abstract**

An engine or vehicle testing apparatus is provided, comprising a dynamometer (3) connected to an output section (2a) of an engine (2) to be tested, a dynamo controller (3'), an actuator (5) for controlling a throttle opening degree of said engine (2), said dynamo controller (3') and said actuator (5) being controlled by a controlling unit, and temperature adjusting devices (51), which receive temperature commands based on a temperature pattern (58) to control the temperature profile of said engine (2) during the test, respectively, wherein said temperature pattern (58) is based on data obtained from temperature measurements of different portions of said engine (2) during driving said engine (2) according to a driving pattern.

## Description

### BACKGROUND OF THE INVENTION

### Field of the Invention

The present invention relates to a map preparing method used for an engine testing apparatus or a vehicle testing apparatus, and relates to the engine testing apparatus. More particularly, the invention relates to a new preparing method in which learned data (actual machine data) which are base of a learning map for determining a throttle (accelerator) opening degree which is a target value for controlling an engine under test, or a learning map for determining a throttle (accelerator) opening degree which is a target value for controlling a vehicle under test is defined as an exponential function or a multiple-degree equation function, thereby finding a peculiar point of learned data, and this peculiar point is automatically corrected to automatically prepare the learning map. The invention also relates to a new preparing method in which a torque curve when a throttle valve is varied from its fully closed position to its fully opened position at a constant speed, and a torque curve when the throttle valve is varied from its fully opened position to its fully closed position at a constant speed are used as data, and a learning map for determining a throttle (accelerator) opening degree which is a target value for controlling an engine under test based on the data, or a learning map for determining a throttle (accelerator) opening degree which is a target value for controlling a vehicle under test is obtained. The invention also relates to an engine testing apparatus.

### Description of the Prior Art

A conventional vehicle simulation system carried out on a stage includes a function for leaning an engine under test (simply "engine", hereinafter), and a learning map is prepared from the learned data, and an engine is controlled based on the learning map.

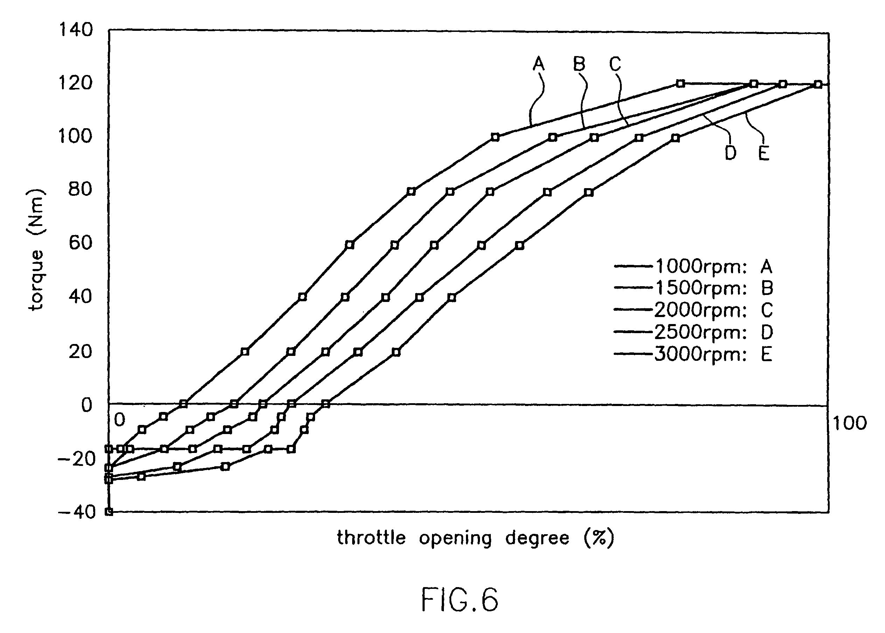

The learned data are prepared by varying the throttle valve while constantly keeping an engine at arbitrary rotation number, and by storing an output torque at that time (see Fig.6). Fig.6 shows a torque curve (actually measured value) when the throttle valve is varied from its fully closed position to its fully opened position at a constant speed. From this, a torque at one point with respect to the throttle valve opening degree in a certain engine rotation number (e.g., 2000 rpm) is determined.

However, since torque curves A, B, C, D and E of various engine rotation number (1000 rpm, 1500 rpm, 2000 rpm, 2500 rpm, 3000 rpm) intersect at low throttle opening degree in some cases, a peculiar portion is generated in a learning map prepared based on the learned data, and accuracy of the control is deteriorated. For example, a peculiar driving state in which the throttle is closed for acceleration is generated.

A first invention has been accomplished in view of the above circumstances, and an object of the first invention is to provide a map preparing method used for an engine testing apparatus or a vehicle testing apparatus capable of preventing a peculiar driving state from being generated.

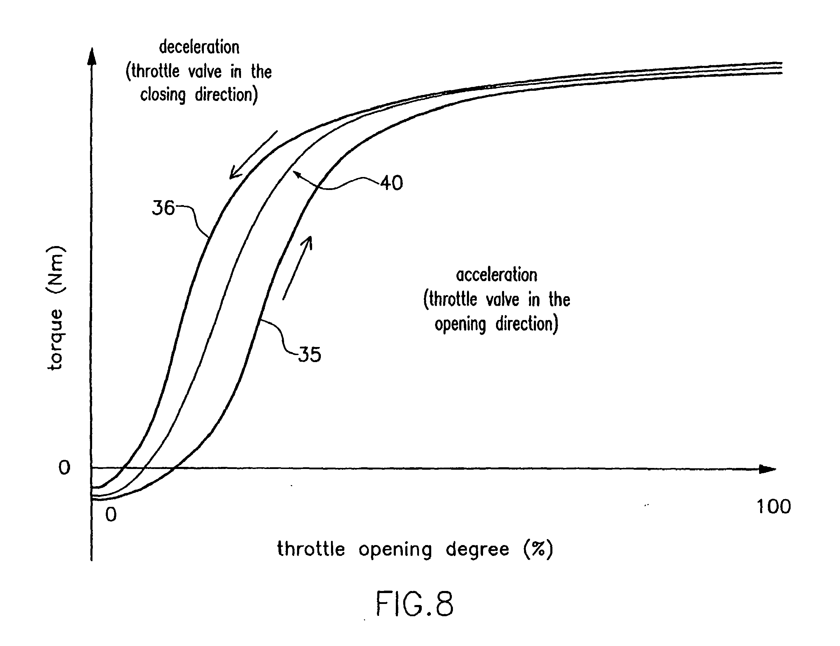

A throttle valve is varied while constantly keeping an engine at arbitrary rotation number (e.g., 1500 rpm), an output torque at that time is stored and obtained output curves are determined as learned data 40, and the learning map is prepared based on the learned data 40 (see Fig.8). Table 1 shows the learning map prepared by the conventional method.

**[Table 1]**

| | rpm 1500 | 2000 | 2500 | 3000 | 3500 |
|---|---|---|---|---|---|
| Nm | | | | | |
| - 40 | 0 | 0 | 0 | 0 | 0 |
| - 35 | 0 | 0 | 0 | 0 | 0 |
| - 30 | 0 | 0 | 0 | 0 | 0 |
| - 25 | 0 | 0 | 0 | 163 | 276 |
| - 20 | 0 | 43 | 110 | 260 | 343 |
| - 15 | 28 | 132 | 200 | 325 | 430 |
| - 10 | 80 | 190 | 279 | 392 | 460 |
| - 5 | 133 | 242 | 339 | 407 | 475 |
| 0 | 175 | 295 | 362 | 430 | 512 |
| 20 | 324 | 430 | 512 | 587 | 678 |
| 40 | 459 | 558 | 654 | 737 | 813 |
| 60 | 572 | 678 | 775 | 888 | 978 |
| 80 | 721 | 813 | 910 | 1045 | 1143 |
| 100 | 925 | 1060 | 1157 | 1261 | 1345 |
| 120 | 1359 | 1525 | 1524 | 1592 | 1675 |
| 140 | 4096 | 4096 | 4096 | 3054 | 2552 |
| 160 | 4096 | 4096 | 4096 | 4096 | 4096 |
| 180 | 4096 | 4096 | 4096 | 4096 | 4096 |
| 200 | 4096 | 4096 | 4096 | 4096 | 4096 |

In this learning map, an output torque (simply "torque", hereinafter) at one point with respect to the certain engine rotation number and the certain throttle opening degree is determined. For example, when the engine rotation number which is a target value is 1700 rpm, if a value of 30 is desired as a target torque Nₘ , referring to the learning map in Table 1, a value of the throttle opening degree for generating the target torque Nₘ can be determined from values of 329, 464, 435 and 563.

Conventionally, the throttle opening degree is controlled only by varying the throttle valve from the fully closed position to the fully opened position, and this throttle opening degree is increased stepwise, for example, for every 5%. Whenever the throttle opening degree is increased for every 5%, it is necessary to wait until the torque is stabilized, and torque value is stored when it is stabilized.

However, when the engine is held at the constant rotation number, a torque output when the throttle valve is operated in its opening direction and a torque output when the throttle valve is operated in its closing direction are different even the throttle opening degrees are the same. On the other hand, the conventional learned data can be obtained only from data when the throttle valve is fixed and the torque is stabilized as described above. Therefore, it is not possible to obtain a learning map corresponding to variation in a speed during running speed pattern of a mode driving.

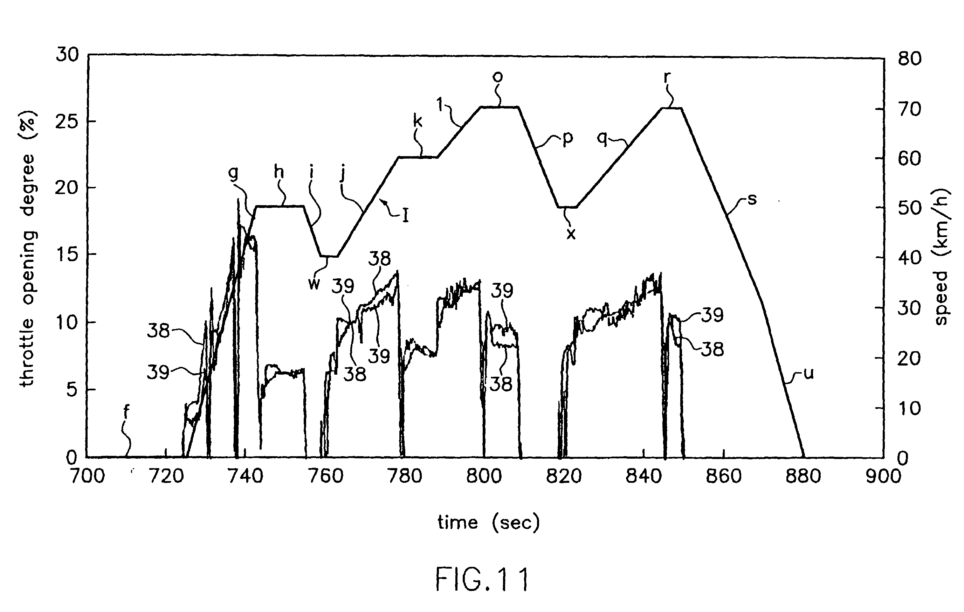

For example, it can be found from Fig.11 that actual vehicle data 38 showing a variation in throttle opening degree during actual vehicle running on a chassis dynamo prepared based on a running speed pattern I of a mode driving, and data 39 simulated in the conventional method are complicatedly crossing each other. In Fig.11, the pattern I is constituted by constant speed straight lines f, h, k, o, r, w, x, acceleration straight lines g, j, l, q and deceleration straight lines i, p, s and u.

That is, from Fig.11, the following points can be found:
(1) For example, both the data 38 and 39 corresponding to the acceleration straight line j do not coincide with each other. That is, since an output torque with respect to a throttle opening degree operated while referring to the learning map and a torque necessary for acceleration do not coincide with each other, the data 39 are deviated higher than the date 38 in the first half, and in order to correct the deviation of vehicle speed caused by this, the data 39 is deviated lower than the data 38 in the latter half.
(2) A vertical relation between the data 38 and 39 in the case of the acceleration straight line j and the vertical relation between the data 38 and 39 in the case of the deceleration straight line p are reversed.
(3) The same phenomenon is caused in the acceleration straight line g and the deceleration straight line s.

In this manner, since the accuracy of simulation is poor, it is difficult to accurately drive an engine with respect to the running speed pattern I of the mode driving.

A second invention has been accomplished in view of the above circumstances, and an object of the second invention is to provide a map preparing method used for an engine testing apparatus or a vehicle testing apparatus capable of enhancing the simulation accuracy.

For verifying the performance of an automobile engine, there exists an engine testing apparatus comprising a dynamometer connected to an output section of an engine under test which is to be tested, a dynamo controller for controlling the dynamometer, and an actuator for controlling a throttle opening degree of the engine under test, and the engine testing apparatus controls the dynamo controller and the actuator to adjust the output of the engine under test.

In the conventional engine testing apparatus, the rotation of the dynamometer is controlled by the dynamo controller, the throttle valve of the engine under test is controlled and operated, the output torque of the engine under test is controlled, thereby simulating the actual vehicle running.

However, the conventional engine testing apparatus does not have a function for controlling temperatures of peripheral portions of the engine under test such as an engine cooling water temperature, a fuel temperature, an intake air temperature, an exhaust gas temperature and a lubricant temperature. Therefore, the temperature environment of an actual vehicle can not be reproduced, an engine behavior close to the actual vehicle can not be obtained and thus, high simulation accuracy can not be obtained.

A third invention has been accomplished in view of the above circumstances, and an object of the third invention is to provide an engine testing apparatus capable of carry out a simulation of an actual vehicle running with high accuracy.

### SUMMARY OF THE INVENTION

To achieve the above object, the first invention comprising the steps of: varying a throttle valve from its fully closed position to its fully opened position while keeping rotation of an engine constantly, carrying out operation for storing an output torque at that time using at least three kinds of different engine rotation number, determining each of obtained torque curves as actual machine data, and preparing a map based on the actual machine date, is characterized by comprising the steps of: describing each of the torque curves on the same X-Y plane when a map is prepared based on the actual machine data; converting actual machine data function for describing torque approximate curves with respect to throttle opening degrees (X axis) on the same X-Y plane while making approximations to the torque curves; judging whether there exists intersection of torque approximate curves; and automatically correcting one of the torque approximate curves which can be judged as peculiar such that a value of y-piece of the torque approximate curve which is seemed to be peculiar among the intersecting torque approximate curves in the judging step assumes a medium value of values of y-pieces of each of the vertically adjacent torque approximate curves.

To achieve the above object, the second invention is characterized in that a method comprising the steps of: calculating an average value of throttle valve operating speed from variation of the throttle valve operation speed; determining the average value of the throttle valve operating speed obtained by the calculation as a representative value corresponding to the throttle valve operating speed in a mode driving, operating the throttle valve in a state where the engine rotation number is made constant by this representative value and describing the torque curves with a plurality of different engine rotation number, and preparing a map for determining the throttle opening degree based on the obtained torque curves.

According to another aspect of the second invention, there is provided a map preparing method, which is used for an engine testing apparatus or a vehicle testing apparatus, comprising the steps of: calculating an average value in throttle valve opening direction and an average value in throttle valve closing direction from variation of the throttle valve operation speed; determining the average value of the throttle valve in the throttle valve opening direction obtained by the calculation as a representative value corresponding to the throttle valve operating in the throttle valve opening direction in a mode driving, operating the throttle valve in its opening direction in a state where the engine rotation number is made constant by this representative value and describing the torque curves with a plurality of different engine rotation number, and preparing a map in the throttle valve opening direction based on the obtained torque curves, determining the average value of the throttle valve in the throttle valve closing direction obtained by the calculation as a representative value corresponding to the throttle valve operating in the throttle valve closing direction in a mode driving, operating the throttle valve in its closing direction in a state where the engine rotation number is made constant by this representative value and describing the torque curves with a plurality of different engine rotation number, and preparing a map in the throttle valve closing direction based on the obtained torque curves.

To achieve the above object, according to the third invention, there is provided an engine testing apparatus comprising a dynamometer connected to an output section of an engine under test which is to be tested, a dynamo controller for controlling the dynamometer, and an actuator for controlling a throttle opening degree of the engine under test, the dynamo controller and the actuator are controlled to adjust an output of the engine under test, wherein commands based on a temperature pattern obtained based on temperature data of various portions around the engine obtained when an actual vehicle running is tested in accordance with a running pattern on a chassis dynamo from an apparatus for controlling the entire apparatus to various temperature adjusting devices provided around the engine under test.

In the engine testing apparatus of the above structure, an apparatus for controlling the entire apparatus outputs respectively, for example, commands based on the temperature pattern obtained based on temperature data of various portions around the engine obtained when the actual running is tested in accordance with the running pattern on the chassis dynamo to various temperature adjusting devices provided around the engine under test, thereby making it possible to reproduce the temperature environment of the actual vehicle, and the engine behavior close to the actual vehicle can be obtained. Therefore, high simulation accuracy can be obtained.

The commands based on the temperature pattern may be based on a virtual vehicle simulation. In this case, it is possible to arbitrarily carry out the simulation of a virtual vehicle by adding various conditions.

### BRIEF DESCRIPTION OF THE DRAWINGS

Fig.1 is a characteristic diagram showing a torque approximate curve obtained by converting a torque curve with respect to a specific engine rotation number into function using exponential function approximation method according to an embodiment of a first invention;
Fig.2 is a characteristic diagram showing torque approximate curves obtained by converting torque curve with respect to a plurality of engine rotation number into functions using exponential function approximation method according to the above embodiment;
Fig.3 is a characteristic diagram showing torque approximate curves utilized for preparing a learning map required for control in which intersection portions generated at lower portion of the throttle opening degree are deleted according to the above embodiment;
Fig.4 is a schematic view for explaining a structure of entire engine testing apparatus according to the first, second and third inventions;
Fig.5 is a characteristic diagram showing torque approximate curves obtained by converting torque curve with respect to a plurality of engine rotation number into functions using exponential function approximation method according to another embodiment of the first invention;
Fig.6 is a characteristic diagram showing torque curves corresponding to actual machine data used in each of the embodiments;
Fig.7 is a view for explaining a structure of one example of a vehicle testing apparatus to which the first and second invention can be applied;
Fig.8 is a view showing learned data used for preparing a learning map of an embodiment of the second invention and learned data used for preparing a conventional learning map;
Fig.9 is a view showing a variation in throttle valve operation speed obtained from the actual vehicle running on a chassis dynamo based on a running speed pattern of a mode driving;
Fig.10 is a view showing the relation between actual vehicle data showing a variation in throttle opening degree in the actual vehicle running on the chassis dynamo and data simulated by the second invention;
Fig.11 is a view showing the relation between actual vehicle data showing a variation in throttle opening degree in the actual vehicle running on the chassis dynamo and data simulated by a conventional method;
Fig.12 is a schematic view showing a structure of a system for controlling temperature of a cooling tank of a radiator mounted to an engine under test; and
Fig.13 is a block diagram showing one example of a control system in the engine testing apparatus.

### DETAILED DESCRIPTION OF THE PREFERRED EMBODIMENTS

An embodiment of a first invention will be explained below with reference to the drawings.

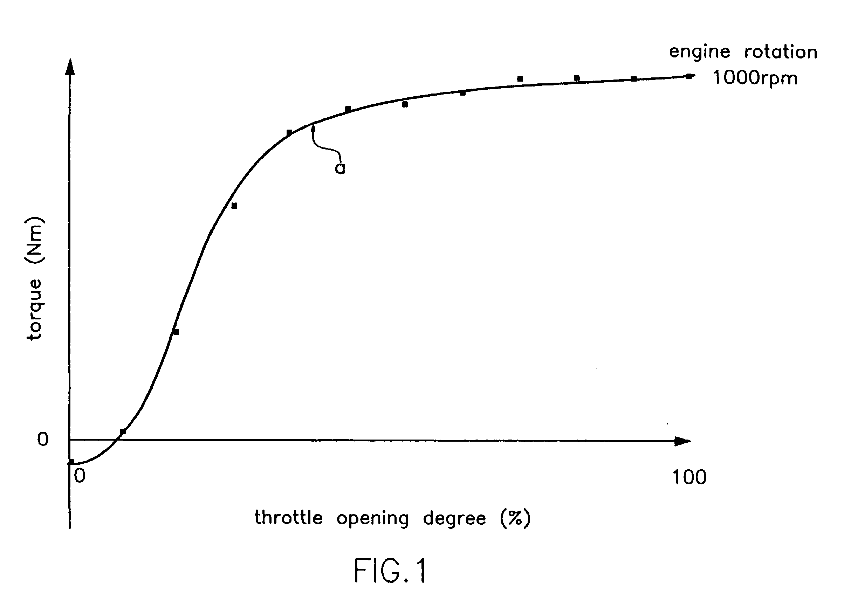

Fig.1 shows a torque approximate curve a obtained by functionally converting a torque curve A when the engine rotation number is 1000 rpm among torque curves A, B, C, D, and E as actual machine data shown in Fig.6 using exponential function approximation method. The torque curves A, B, C, D, and E can be obtained in an engine testing apparatus 1 (which will be described later) constituting a vehicle simulation system carried out on a stage.

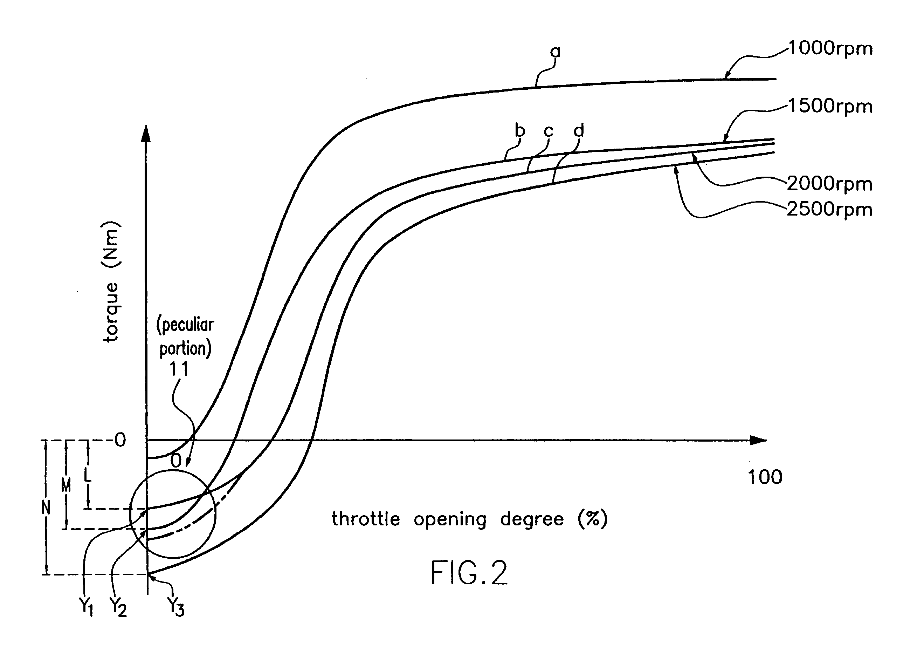

In Fig.2, torque approximate curves a, b, c, and d obtained by functionally converting the torque curve A when the engine rotation number is 1000 rpm, a torque curve B when the engine rotation number is 1500 rpm, a torque curve C when the engine rotation number is 2000 rpm, a torque curve D when the engine rotation number is 2500 rpm among the torque curves A, B, C, D and E are described on the same X-Y plane.

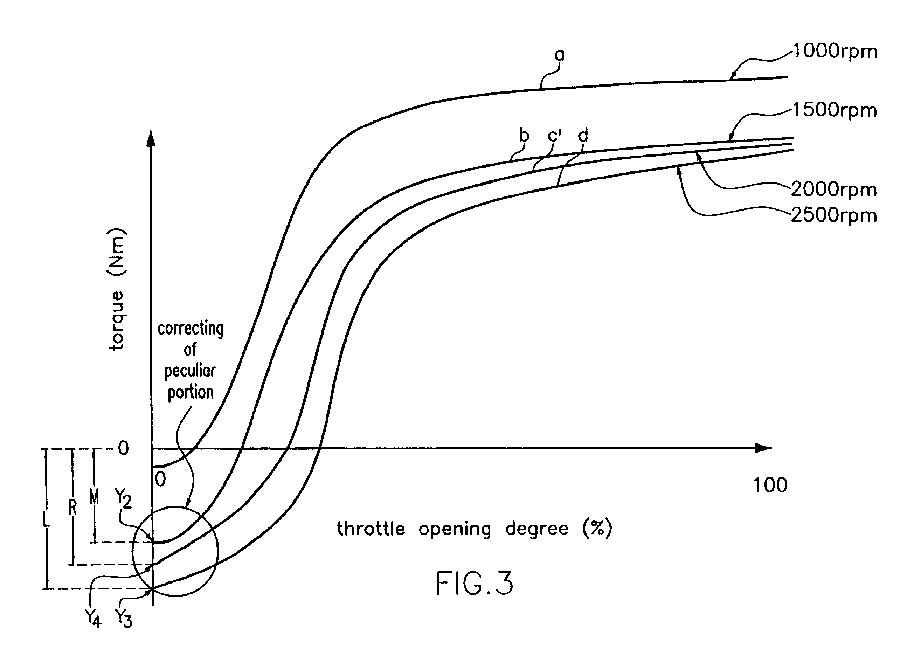

Of the torque approximate curves b an c intersecting in Fig.2, the torque approximate curve c is defined as a peculiar curve, and this is automatically corrected, and Fig.3 shows a characteristic view of the automatically corrected the torque approximate curve c.

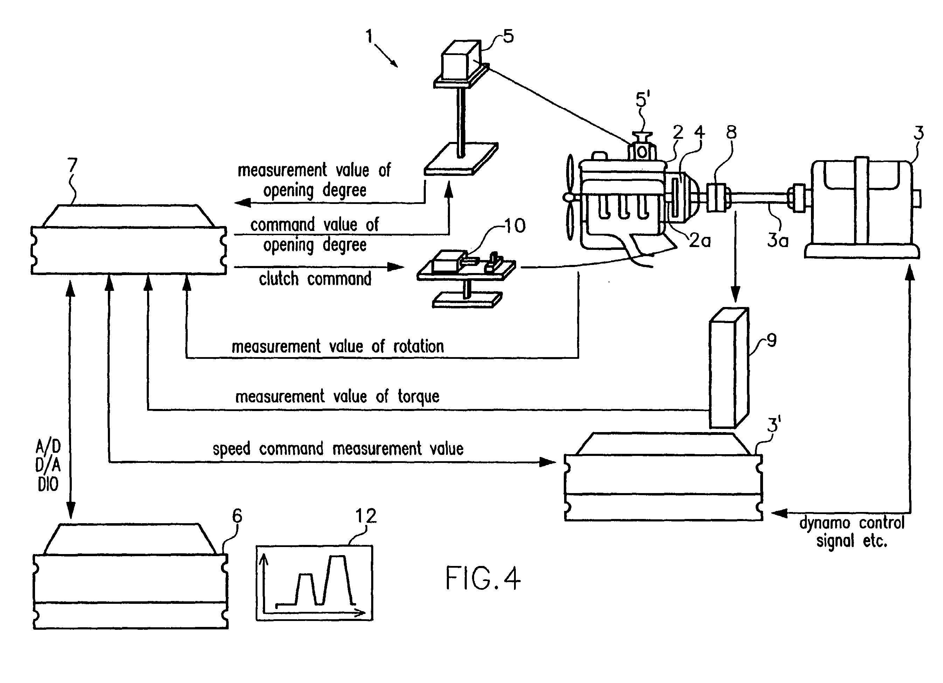

Fig.4 shows the engine testing apparatus 1.

In Fig.4, an output shaft 2a of a engine 2 under test (simply "engine" hereinafter) and a driving shaft 3a of a dynamometer 3 are detachably connected to each other through a clutch 4. A dynamo controller 4 controls the dynamometer 3. A throttle actuator 5 controls the throttle opening degree of the engine 2. A computer 6 controls the dynamo controller 4 and the throttle actuator 5 through an interface 7.

The symbols 8 and 9 respectively represent a torque measuring device and a torque amplifier. The symbol 10 represents a clutch actuator. The symbol 12 represents a target vehicle speed pattern.

As a first step for preparing a learning map, actual machine data (learned data) are prepared. The actual machine data are raw data obtained by variation of engine condition on engine dynamo. That is, an operation for varying the throttle valve from its fully closed position to its fully opened position while constantly keeping the engine rotation number and storing the output torque at that time is carried out at each of engine rotation number of 1000 rpm, 15000 rpm, 2000 rpm, 2500 rpm and 3000 rpm, and output torque at that time is stored in the computer 6. Fig.6 shows torque curves A, B, C, D, and E described on the same X-Y plane. The obtained torque curves A, B, C, D, and E correspond to respective engine rotation number.

Next, in this embodiment, these torque curves A, B, C, D, and E are functionally converted by exponential function approximation method.

Next, it is judged whether torque approximate curves a, b, c, d (see Fig.2) functionally converted and described on the same X-Y plane are intersecting. In Fig.2, since the torque approximate curve e corresponding to the torque curve E does not intersect with any other torque approximate curves a, b, c, d, the torque approximate curve e is omitted.

In this embodiment, it can be seen that the torque approximate curves b and c are intersecting at a low portion of the throttle opening degree from Fig.2. A value of y-piece of the torque approximate curve c is defined as Y₁. | Y₁ | =L. A value of y-piece of the torque approximate curve b is defined as Y₂. | Y₂ | =M. A value of y-piece of the torque approximate curve d is defined as Y₃. | Y₃ | =N. Herein, L<M<N.

Either one of the intersecting torque approximate curves b and c is defined as peculiar, and it is automatically corrected.

Fig.3 shows a case in which the torque approximate curve c is defined as peculiar, and it is automatically corrected. In this case, it is considered that the torque approximate curve c is sandwiched between the torque approximate curves b and d over the entire throttle opening degree (X axis) except peculiar portion (intersecting portion) 11 intersecting with the torque approximate curve b.

The torque approximate curve c is re-defined as a torque approximate curve c' (see Fig.3) such that the value of the y-piece of the torque approximate curve c assume a medium value of the torque approximate curves b and d sandwiching the torque approximate curve c, thereby carrying out the automatic correction. That is, as shown in Fig.3, a value of the y-piece of the torque approximate curve c' is Y₄, | Y₄ | =R=(L+M)/2.

With this, the intersecting portion 11 generated at the low portion of the throttle opening degree can be deleted, and it is possible to prepare a learning map necessary for control in which a peculiar portion 11 is deleted from all torque approximate curve a, b, c, d, angle.

From this learning map, an excellent target throttle (accelerator) opening degree for engine control can be determined. For example, when the target engine rotation number 1700 rpm, if 30 is desired as a target torque Nₘ referring to the learning map in Table 2, a value of the throttle (accelerator) opening degree for generating the target torque Nₘ can be determined from values of 329, 464, 435 and 563.

**[Table 2]**

| | rpm 1500 | 2000 | 2500 | 3000 | 3500 |
|---|---|---|---|---|---|
| Nm | | | | | |
| -40 | 0 | 0 | 0 | 0 | 0 |
| -35 | 0 | 0 | 0 | 0 | 0 |
| - 30 | 0 | 0 | 0 | 0 | 0 |
| -25 | 0 | 0 | 0 | 165 | 278 |
| - 20 | 0 | 45 | 112 | 262 | 345 |
| - 15 | 30 | 135 | 202 | 330 | 435 |
| - 10 | 82 | 195 | 284 | 397 | 465 |
| - 5 | 135 | 247 | 344 | 412 | 480 |
| 0 | 180 | 300 | 367 | 435 | 517 |
| 20 | 329 | 435 | 517 | 592 | 683 |
| 40 | 464 | 563 | 659 | 742 | 818 |
| 60 | 577 | 683 | 780 | 893 | 983 |
| 80 | 726 | 818 | 915 | 1050 | 1148 |
| 100 | 930 | 1065 | 1162 | 1266 | 1350 |
| 120 | 1364 | 1530 | 1529 | 1597 | 1680 |
| 140 | 4096 | 4096 | 4096 | 3059 | 2557 |
| 160 | 4096 | 4096 | 4096 | 4096 | 4096 |
| 180 | 4096 | 4096 | 4096 | 4096 | 4096 |
| 200 | 4096 | 4096 | 4096 | 4096 | 4096 |

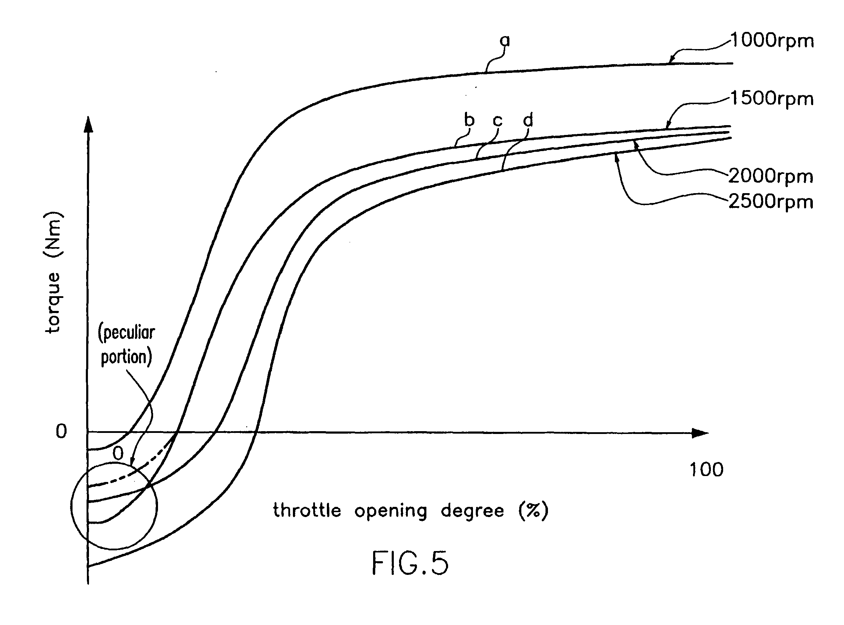

As another embodiment, the torque approximate curve b can be defined as peculiar, and this may be automatically corrected as shown in Fig.5. In this case, it is considered that the torque approximate curve b is sandwiched between the torque approximate curves a and c over the entire throttle opening degree (X axis) except peculiar portion (intersecting portion) 11 intersecting with the torque approximate curve c.

Although the number of peculiar portion (intersecting portion) 11 of the torque approximate curves is one in the above embodiment, the present invention can also be applied to a case in which there are a plurality of peculiar portion (intersecting portion). In this case, the above-described technique may be repeated by the number of the peculiar portion (intersecting portion) until the peculiar portion (intersecting portion) disappears.

In each of the above embodiments, the learning map preparing method used for the engine testing apparatus 1 is described, but the first invention can also be applied to a vehicle testing apparatus using a chassis dynamometer.

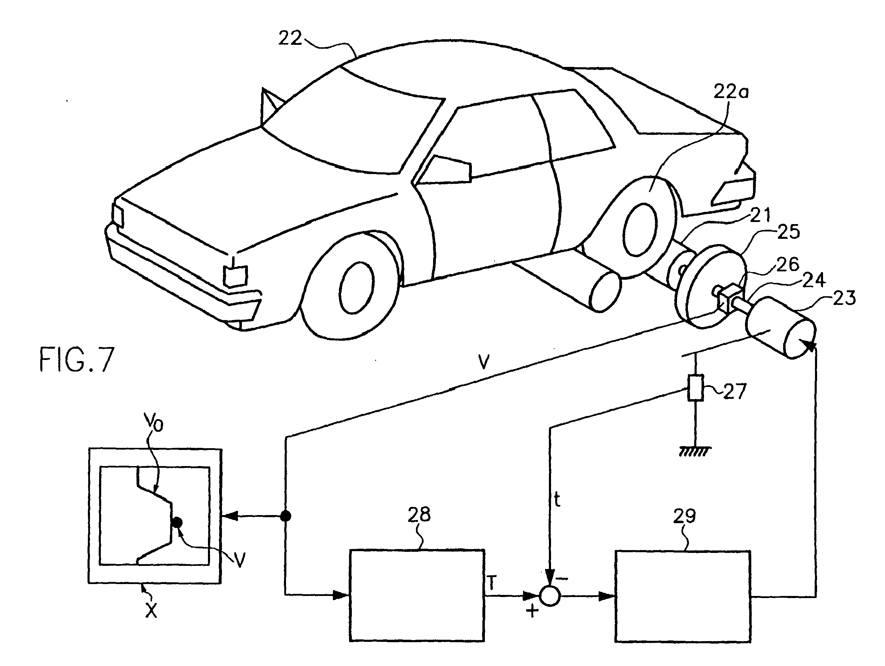

Fig.7 shows one example of the vehicle testing apparatus. In Fig.7, the symbol 21 represents a rotation roller on which the driving wheel 22a of a vehicle 22 under test is mounted, and the symbol 23 represents a chassis dynamometer operatively connected to the rotation roller 21 through the shaft24. This chassis dynamometer 23 corresponds to the dynamometer 3 of the engine testing apparatus 1. The symbol 25 represents a flywheel provided on a shaft24, and the symbol 26 represents a speed sensor provided on the shaft 24. The speed sensor 26 corresponds to a sensor (not shown) for outputting a rotation measurement value in Fig.4 showing the engine testing apparatus 1. This sensor is provided in an engine 2 shown in Fig.4 in the engine testing apparatus 1. The symbol 27 represents a torque sensor provided in the chassis dynamometer23, and this corresponds to the torque measuring device 8 of the engine testing apparatus 1. The symbol 28 represents a running resistance generator for generating a target running resistance signal T corresponding to an actual running speed signal v sent from the speed sensor 26. The symbol 29 represents a chassis dynamo controller for driving and controlling the chassis dynamometer 23 such that a running resistance (target running resistance) corresponding to the actual running speed is applied to the driving wheel 22a based on a difference signal between an actual running resistance signal t sent from the torque sensor 27 and a target running resistance signal T sent from the running resistance generator 28. The symbol X represents a driver's aid display unit on which a set target driving pattern Vo (target vehicle speed pattern 12 in Fig.4) and a variation of data position V showing driving state of actual current time (actual running speed signal v of current time sent from the speed sensor 26) are displayed such that the driver of the vehicle can visually check.

As described above, according to the first invention, learning data (actual machine data) which are base of a learning map for determining a throttle (accelerator) opening degree which is a target value for controlling an engine under test, or a learning map for determining a throttle (accelerator) opening degree which is a target value for controlling a vehicle under test is defined as an exponential function or a multiple-degree equation function, thereby finding a peculiar point, and this peculiar point is automatically corrected to automatically preparing the learning map. Therefore, a map having no peculiar portion (intersecting portion) can be made, and there is effect that the control accuracy is enhanced.

An embodiment of a second invention will be explained below.

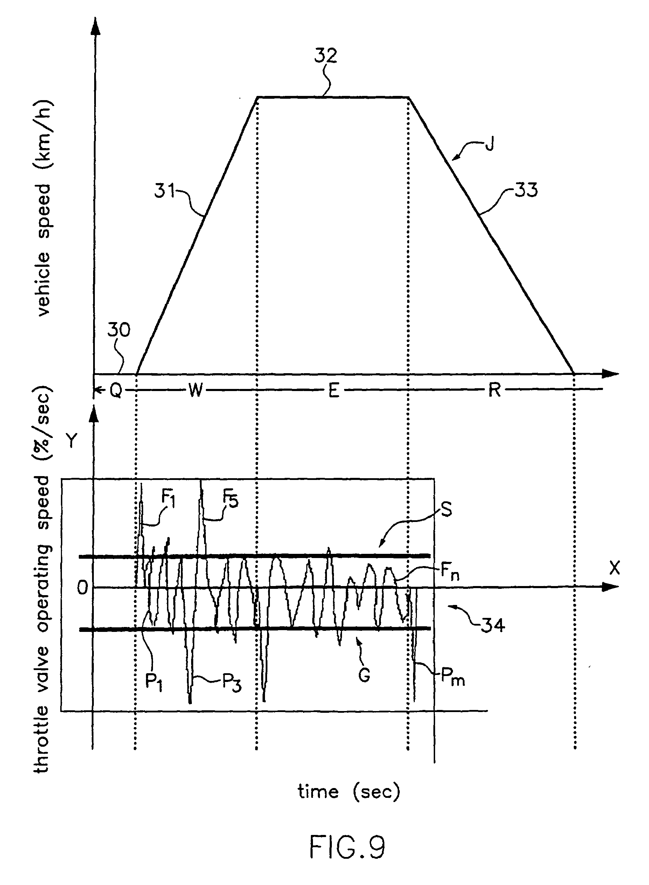

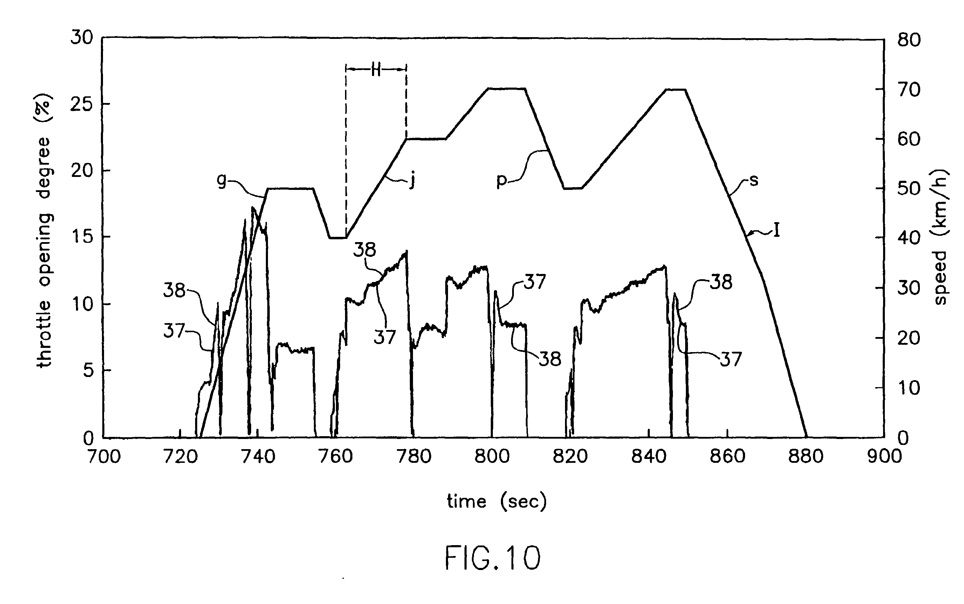

Fig. 8 is a view showing learned data used for preparing a learning map of the second invention and learned data used for preparing a conventional learning map. Fig.4 shows the engine testing apparatus 1 constituting a vehicle simulation system carried out on a stage. Fig.9 shows a variation in throttle valve operating speed obtained from the actual vehicle running on the chassis dynamo based on a running speed pattern J of a mode driving different from a running speed pattern I of a mode driving employed in Fig.11. Fig.10 shows the relation between the actual vehicle data 38 showing a variation in throttle opening degree in the actual vehicle running on the chassis dynamo and data 37 simulated by this invention.

In Fig.4, the output shaft 2a of the engine 2 under test (simply "engine" hereinafter) and the driving shaft 3a of the dynamometer 3 are detachably connected to each other through the clutch 4. The dynamo controller 3' controls the dynamometer 3. The throttle actuator 5 controls the throttle opening degree of the engine 2. The computer 6 controls the dynamo controller 3' and the throttle actuator 5 through the interface 7.

The symbols 8 and 9 respectively represent the torque measuring device and the torque amplifier. The symbol 11 represents a clutch actuator.

As a first step for preparing a learning map, a variation in operating speed of the throttle valve which opens and closes in association with the accelerator pedal is obtained from the actual vehicle running on the chassis dynamo in corresponding manner to variation in speed in the running speed pattern I of the mode driving.

For the sake of convenience, a method for obtaining the variation in the throttle valve operation speed and then, from this result, calculating the average value of the throttle valve opening direction and the average value of the throttle valve closing direction will be explained for a case in which it is obtained from the running speed pattern J of the simplified mode driving as shown in Fig.9 not from the running speed pattern I of the mode driving shown in Figs.10 and 11. This is because even when the running speed pattern I is employed, the average value can be obtained by the same method.

In Fig.9, the running speed pattern J is set to such a target value that the speed passes through a transient portion W of an acceleration (transient) straight 31 which varies straightly from an idling portion Q of a constant speed (steady) straight line 30, and again reaches a constant speed portion E of a constant speed straight line 32, and further reaches a transient portion R of a deceleration (transient) straight line 33 which straightly varies from the constant speed portion E.

During the actual vehicle running on the chassis dynamo, a variation of the throttle valve operating speed is obtained in corresponding manner to the variation in speed during the running speed pattern J. The symbol 34 represents variation data of the obtained throttle valve operating speed.

Next, the average value of the throttle valve opening direction and the average value of the throttle valve closing direction are calculated from the variation data 34.

The average value S of the throttle valve opening direction is arithmetical average value obtained by dividing a total sum of data F₁... F of portion higher than the horizontal axis X (Y>0) by the number of data (n).

The average value G of the throttle valve closing direction is arithmetical average value obtained by dividing a total sum of data P₁... P of portion lower than the horizontal axis X (Y<0) by the number of data (m).

The torque curve is obtained by operating the throttle valve in its opening direction (the throttle opening degree is continuously varied from 0 to 100%) in a state where the engine rotation number is kept constant (e.g., 1500 rpm) at the representative value S. That is, the throttle valve is varied from the fully closed position to the fully opened position at the constant speed shown with the representative value S, thereby obtaining the torque curve 35 shown in Fig.8.

Further, using a plurality of engine rotation number different from 1500 rpm, torque curves (not shown) are obtained by the same method. For example, while keeping 2000 rpm, the throttle valve is operated in the opening direction (the throttle opening degree is continuously varied from 0 to 100%) at the representative value S, and the torque curve is obtained. Based on the obtained torque curves, a map in the throttle valve opening direction is prepared. The following Table 3 is a prepared learning map.

**[Table 3]**

| | rpm 1500 | 2000 | 2500 | 3000 | 3500 |
|---|---|---|---|---|---|
| Nm | | | | | |
| -40 | 0 | 0 | 0 | 0 | 0 |
| -35 | 0 | 0 | 0 | 0 | 0 |
| -30 | 0 | 0 | 0 | 0 | 0 |
| - 25 | 0 | 0 | 0 | 165 | 278 |
| - 20 | 0 | 45 | 112 | 262 | 345 |
| - 15 | 30 | 135 | 202 | 330 | 435 |
| - 10 | 82 | 195 | 284 | 397 | 465 |
| - 5 | 135 | 247 | 344 | 412 | 480 |
| 0 | 180 | 300 | 367 | 435 | 517 |
| 20 | 329 | 435 | 517 | 592 | 683 |
| 40 | 464 | 563 | 659 | 742 | 818 |
| 60 | 577 | 683 | 780 | 893 | 983 |
| 80 | 726 | 818 | 915 | 1050 | 1148 |
| 100 | 930 | 1065 | 1162 | 1266 | 1350 |
| 120 | 1364 | 1530 | 1529 | 1597 | 1680 |
| 140 | 4096 | 4096 | 4096 | 3059 | 2557 |
| 160 | 4096 | 4096 | 4096 | 4096 | 4096 |
| 180 | 4096 | 4096 | 4096 | 4096 | 4096 |
| 200 | 4096 | 4096 | 4096 | 4096 | 4096 |

On the other hand, the torque curve is obtained by operating the throttle valve in its closing direction at the representative value G in a state where the engine rotation number is kept constant (e.g., 1500 rpm). That is, the throttle valve is varied from the fully closed position to the fully opened position at the constant speed shown with the representative value G, thereby the throttle opening degree is continuously varied from 100 to 0%, and the torque curve 36 shown in Fig.8 is obtained. In this case also, using a plurality of engine rotation number different from 1500 rpm, torque curves (not shown) are obtained by the same method.

Based on the obtained torque curves, a map in the throttle valve closing direction is prepared. The following Table 4 is a prepared learning map.

**[Table 4]**

| | rpm 1500 | 2000 | 2500 | 3000 | 3500 |
|---|---|---|---|---|---|
| Nm | | | | | |
| -40 | 0 | 0 | 0 | 0 | 0 |
| -35 | 0 | 0 | 0 | 0 | 0 |
| -30 | 0 | 0 | 0 | 0 | 0 |
| - 25 | 0 | 0 | 0 | 153 | 270 |
| - 20 | 0 | 35 | 102 | 260 | 337 |
| -15 | 20 | 125 | 192 | 320 | 425 |
| -10 | 72 | 185 | 274 | 387 | 415 |
| - 5 | 125 | 237 | 334 | 402 | 470 |
| 0 | 170 | 290 | 357 | 425 | 497 |
| 20 | 319 | 425 | 507 | 582 | 673 |
| 40 | 454 | 553 | 649 | 732 | 808 |
| 60 | 567 | 673 | 770 | 883 | 973 |
| 80 | 716 | 808 | 905 | 1040 | 1138 |
| 100 | 920 | 1055 | 1152 | 1256 | 1340 |
| 120 | 1354 | 1520 | 1519 | 1587 | 1670 |
| 140 | 4096 | 4096 | 4096 | 3049 | 2547 |
| 160 | 4096 | 4096 | 4096 | 4096 | 4096 |
| 180 | 4096 | 4096 | 4096 | 4096 | 4096 |
| 200 | 4096 | 4096 | 4096 | 4096 | 4096 |

In this manner, the throttle opening degree is output to control the engine 2 using the learning map in the throttle valve opening direction when the throttle valve is operated in the opening direction during the running speed pattern J, and using the learning map in the throttle valve closing direction when the throttle valve is operated in the closing direction. Therefore, it is possible to moderate the deviation of the throttle opening degree which is caused in the conventional technique, and high simulation accuracy can be obtained.

If this method is applied to the running speed pattern I shown in Fig.10, the following facts can be found from Fig.10. In Fig.10, elements having the same symbols as those shown in Fig.11 are the same elements or similar elements. The symbol 38 represents actual vehicle data showing a variation of the throttle opening degree in the actual running on the chassis dynamo prepared based on the running speed pattern I of the mode driving. The symbol 37 represents data simulated by this invention. From Fig.10, it can be found that both the data almost coincide with each other.

That is,
(1) For example, both the data 38 and 37 corresponding to the acceleration straight line e coincide. This means that reproduction of the engine state is enhanced in the transient portion H.
(2) Similarly, for example, both the data 37 and 38 corresponding to the deceleration straight line i also coincide.
(3) The same phenomenon is generated also in the acceleration straight line b and the deceleration straight line 1.

From these learning maps, a target throttle (accelerator) opening degree having high accuracy in engine control can be determined. For example, when the target engine rotation number is 1700 rpm, if 30 is desired as a target torque Nₘ , when the throttle valve is operated in the opening direction, referring to the learning map in Table 3, a value of the throttle (accelerator) opening degree for generating the target torque Nₘ can be determined from values of 329, 464, 435 and 563. On the other hand, when the target engine rotation number is 1700 rpm, if 30 is desired as a target torque Nₘ , when the throttle valve is operated in the closing direction, referring to the learning map in Table 4 instead of Table 3, a value of the throttle (accelerator) opening degree for generating the target torque N can be determined from values of 319, 454, 425 and 553 which are different from those when the throttle is operated in the opening direction.

In each of the above embodiments, the learning map preparing method used for the engine testing apparatus 1 is described, but the first invention can also be applied to a vehicle testing apparatus using a chassis dynamometer.

Fig.7 shows one example of the vehicle testing apparatus. In Fig.7, the symbol 21 represents a rotation roller on which the driving wheel 22a of a vehicle 22 under test is mounted, and the symbol 23 represents a chassis dynamometer operatively connected to the rotation roller 21 through the shaft24. This chassis dynamometer 23 corresponds to the dynamometer 3 of the engine testing apparatus 1. The symbol 25 represents a flywheel provided on a shaft24, and the symbol 26 represents a speed sensor provided on the shaft 24. The speed sensor 26 corresponds to a sensor (not shown) for outputting a rotation measurement value in Fig.4 showing the engine testing apparatus 1. This sensor is provided in an engine 2 shown in Fig.4 in the engine testing apparatus 1. The symbol 27 represents a torque sensor provided in the chassis dynamometer23, and this corresponds to the torque measuring device 8 of the engine testing apparatus 1. The symbol 28 represents a running resistance generator for generating a target running resistance signal T corresponding to an actual running speed signal v sent from the speed sensor 26. The symbol 29 represents a chassis dynamo controller for driving and controlling the chassis dynamometer 23 such that a running resistance (target running resistance) corresponding to the actual running speed is applied to the driving wheel 22a based on a difference signal between an actual running resistance signal t sent from the torque sensor 27 and a target running resistance signal T sent from the running resistance generator 28. The chassis dynamo controller 29 corresponds to the dynamo controller 3' of the engine testing apparatus 1. The symbol X represents a driver's aid display unit on which a set target driving pattern V₀ (corresponding to running speed pattern I in Figs.10 and 11, and the running speed pattern J in Fig.9) and a variation of data position V showing driving state of actual current time (actual running speed signal v of current time sent from the speed sensor 26) are displayed such that the driver of the vehicle can visually check.

As described above, according to the second embodiment, the average value of throttle valve operating speed is calculated from variation of the throttle valve operation speed; the average value of the throttle valve operating speed obtained by the calculation is determined as a representative value corresponding to the throttle valve operating speed in a mode driving, the throttle valve is operated in a state where the engine rotation number is made constant by this representative value and describing the torque curves with a plurality of different engine rotation number, and a map for determining the throttle opening degree based on the obtained torque curves is prepared. Therefore, it is possible to control the engine to a throttle valve opening degree corresponding to the throttle valve operating speed, and high simulation accuracy can be obtained.

Especially, the throttle valve is operated at the representative value of the throttle valve operating speed, the data for preparing the learning map are prepared by storing the torque curve when the throttle valve is operated from the fully closed position to the fully opened position at the representative value (constant speed) and the torque curve when the throttle valve is operated from the fully opened position to the fully closed position at the representative value (constant speed). Therefore, it is possible to control the engine to a throttle valve opening degree corresponding to both the throttle valve opening direction and closing direction, and high simulation accuracy can be obtained.

Next, an embodiment of a third embodiment will be explained with reference to the drawings. Figs.4, 12 and 13 show one embodiment of this invention. First, Fig.4 schematically shows the entire structure of the engine testing apparatus according to the third invention. In Fig.4, the symbol 2 represents the engine under test, the symbol 3 represents the dynamometer connected to the output section of the engine under test, and this is controlled by the dynamo controller 3'. In this embodiment, the output shaft 2a of the engine 2 under test and the driving shaft 3a of the dynamometer 3 are detachably connected to each other through the clutch 4. The symbol 10 represents the clutch actuator which drives clutch 4. The symbol 5' represents the throttle of the engine 2 under test and this is driven by the throttle actuator 5, and the opening degree of the throttle is controlled. The symbols 8 represents the torque sensor provided in the driving shaft 3a of the dynamometer 3, and the symbol 9 represents the torque amplifer which amplifies the output of the torque sensor 9 appropriately.

The symbol 6 represents the computer as a simulator which controls the entire apparatus, and the symbol 41 represents a signal conditioner unit. The computer 6 performs a computation based on an input from an input apparatus (not shown) and based on signals from various sensor such as the torque sensor 8 provided in the apparatus, and outputs commands to various portions of the apparatus. The signal conditioner unit 41 is an interface having AD converting function and DA converting function. The signal conditioner unit 41 AD-converts signals from various sensors such as a torque sensor 8, DA-converts command from the computer 6, and output commands to various portion of the apparatus such as the dynamo controller 3', the clutch actuator 10 and the throttle actuator 5.

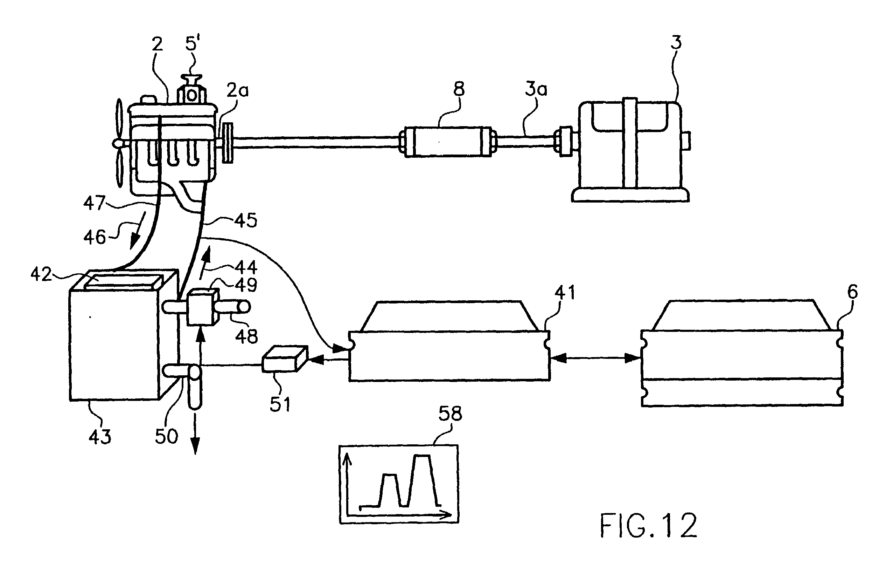

The above-described structure is the same as that of the conventional engine testing apparatus. Characteristics of this invention resides in that commands based on a temperature pattern are output to various temperature adjusting devices provided around the engine 2 under test from the computer 6 which controls the entire apparatus. This will be explained with reference to Fig.12.

Fig.12 is a schematic view showing a structure of a system for controlling a temperature of a cooling tank of a radiator mounted to an engine 2 under test.

In Fig.12, the symbol 42 represents a radiator mounted to the engine 2 under test, and the symbol 43 represents a radiator tank for cooling the radiator 42.

The engine 2 under test and the radiator 42 are connected to each other through a water-sending pipe 45 for supplying cold water 44 from the radiator to the engine 2 under test and a water-returning pipe 47 for returning warm water 46 from the engine 2 to the radiator 42. The symbol 48 represents a water-supplying pipe connected to the radiator tank 43. The water-supplying pipe 48 is connected to a water source (not shown) and includes a solenoid valve 49. The symbol 50 represents a water-discharging pipe connected to the radiator tank 43. The symbol 51 represents a temperature adjusting device for outputting a signal for opening and closing the solenoid valve 49. By appropriately opening or closing the solenoid valve 49, the cold water from the water source is supplied to the radiator tank 43, thereby cooling the radiator 42.

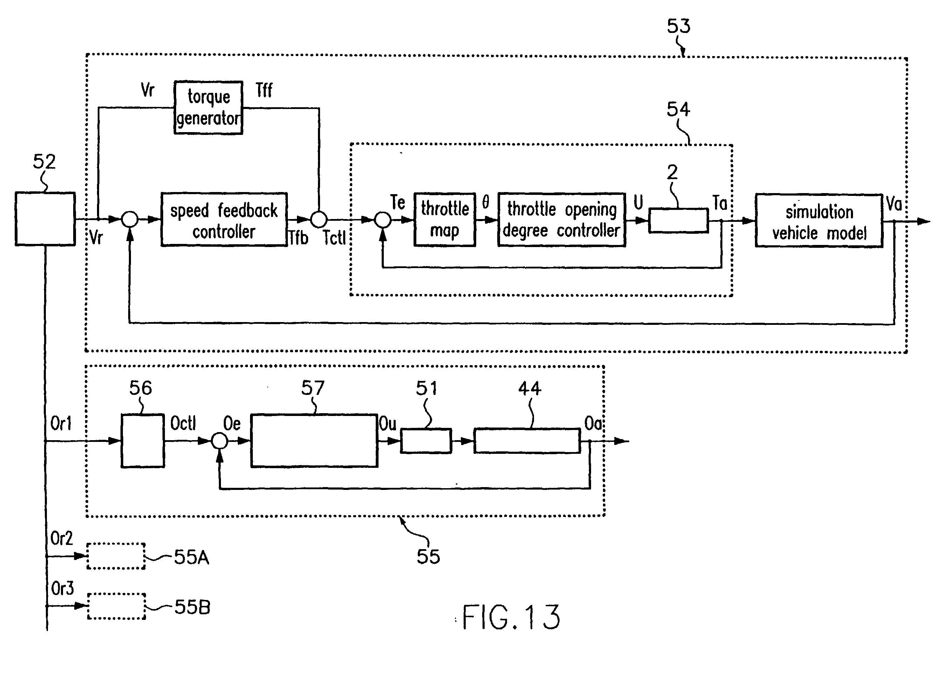

Fig.13 is a block diagram showing one example of a control system in the engine testing apparatus. In Fig.13, the symbol 52 represents a target pattern generator which is provided in the computer 6 so as to output a target speed signal Vr for allowing the engine 2 under the test to run in the actual vehicle at a predetermined running pattern. The symbol 53 represents a simulation vehicle control system which converts a target speed signal Vr from the target pattern generator 52 into a control target torque, and controls the torque control system 54 including the engine 2 under test, so that the engine 2 under test outputs in a state where the actual vehicle running is simulated. The structure and function of each of the target pattern generator 52 and the simulation vehicle control system 53 are the same as those of the conventional engine testing apparatus.

The symbol 55 represents a temperature control system for control a temperature of the engine cooling water 44 supplied to the engine 2 under test to a predetermined temperature. The temperature control system 55 includes a delay correction control circuit 56 for correcting a response delay of a measured temperature with respect to a temperature instruction value of the temperature adjusting device 51, and a temperature feedback controller 57. A temperature target value Orl output from the target pattern generator 52 is input to the delay correction control circuit 56. That is, the target pattern generator 52 outputs the temperature target value Orl to the temperature control system 55 in accordance with time series temperature pattern (the horizontal axis shows time, and the vertical axis shows temperature (°C) shown with the symbol 58 in Fig.12.

The operation of the engine testing apparatus having the above-described structure will be explained. In the computer 6 which controls the entire apparatus, a time series pattern (time series temperature pattern) 58 of a temperature of the engine cooling water obtained when the actual vehicle running was tested in accordance with the running pattern on the chassis dynamo is previously stored as a program. The time series temperature pattern 58 is input to the target pattern generator 52, thereby outputting the temperature target value Orl of the engine cooling water 44, and this is input to the cooling water temperature control system 55. Since the cooling water temperature control system 55 is provided with the delay correction control circuit 56, the delay correction control circuit 56 early outputs a temperature target value Octl so as to correct the response delay of the measuring temperature with respect to the temperature instruction value of the temperature adjusting device 51.

The temperature target value Octl, the current (actual) actually measured temperature Ta and a deviation Oe are PI-controlled for example by the temperature feedback controller 57, and a control signal is output to the temperature adjusting device 51. Based on this control signal, an opening signal or a closing signal is sent to the solenoid valve 49 from the temperature adjusting device 51, and temperature of the engine cooling water 44 is varied with time in the same way as that of the actual running test.

As explained above, temperatures around the engine 2 under test includes the engine cooling water temperature, the fuel temperature, the intake air temperature, the exhaust gas temperature and the lubricant temperature. It is necessary to control these temperatures respectively, and there are provided temperature adjusting devices (not shown). Therefore, in Fig.13, as shown with symbols 55A, 55B, ··· , if the temperature control systems respectively corresponding the fuel temperature and the like are constituted in the same way as the temperature control system 55, and they are controlled in the same manner, it is possible to reproduce the temperature environment of the actual vehicle of the various portions around the engine 2 under the test, and the engine behavior close to the actual vehicle can be obtained. Therefore, high simulation accuracy can be obtained.

In the above embodiment, to the temperature control systems 55,55A,55B,···, commands based on the temperature pattern obtained based on temperature data of various portions around the engine obtained when the actual vehicle running was tested in accordance with the running pattern on the chassis dynamo are set, but a temperature pattern based on a virtual pattern may be set. In this case, it is possible to arbitrarily carry out the simulation of a virtual vehicle by adding various conditions.

As explained above, according to the engine testing apparatus described in claim 4, a temperature around the engine can be reproduced in the same way as the actual vehicle running by the chassis dynamo, the engine behavior is extremely close to the actual vehicle running, the accuracy of the simulation can be enhanced, and the engine performance can be tested in a state close to the actual case.

According to the engine testing apparatus described in claim 5, it is possible to simulate a virtual vehicle, and it is possible to utilize the test in design of various engine.

Aspects of the present invention may also be described by the following elucidations:

According to an aspect of the present invention a method is provided for preparing a map to be used for controlling an engine testing apparatus or a vehicle testing apparatus, said method comprising varying an opening degree of a throttle valve of an engine from its fully closed position to its fully opened position while keeping a rotation number of said engine at a constant value, thereby measuring and storing a series of torque values of said engine corresponding to said opening degree of said throttle valve, repeating the previous step at least two times while using different values of engine rotation numbers, respectively, converting said series of measured torque values into torque curves by fitting all measured torque series by approximation procedures, displaying all fitted torque curves in one single X-Y plane, if two of said fitted torque curves intersect, correcting one of the intersecting torque curves such in that the corrected torque curve remains positioned next to the closest torque curves, respectively, however without any intersections, and preparing the map on the basis of above obtained torque curves.

Said correcting procedure may be mainly constituted by artificially setting a value Y1 which is the intersecting point of the torque curve to be corrected with an ordinate of said X-Y plane on a new value Y4 which is defined by the formula |Y4| = (|Y2|+|Y3|)/2. wherein Y2 and Y3 are the intersecting points of that torque curves with said ordinary between which the major part of said torque curve to be corrected is positioned, and by adopting said torque curve to be corrected to said new value Y4 using approximation procedures.

According to an aspect of the present invention a method is provided for preparing a map to be used for controlling an engine testing apparatus or a vehicle testing apparatus, said method comprising a) measuring and storing a series of opening/closing speed values of a throttle valve of an engine, said series of said opening/closing speed values being generated by driving said engine or vehicle according to a driving pattern, b) calculating an average value from said measured series of opening/closing speed values, c) varying an opening degree of said throttle valve with a opening/closing speed value being equal to that of said calculated average value while keeping an rotation number of said engine at a constant value, thereby measuring and storing a series of torque values of said engine corresponding to said opening degree of said throttle valve, d) converting said series of measured torque values into torque curves by fitting all measured torque series by approximation procedures, e) repeating the steps c) and d) while using different rotation numbers, respectively, and f) preparing the map from the torque curves obtained above.

The steps b) to f) as mentioned above may be are replaced by g) calculating a first and a second average value from said measured series of opening/closing speed values, h) varying an opening degree of said throttle valve from its closed to its fully opened position with a opening/ closing speed value being equal to that of said first average value while keeping an engine rotation number at a constant value, thereby measuring and storing a series of torque values of said engine corresponding to said opening degree of said throttle valve, i) repeating step h) while using different rotation numbers, respectively, k) varying said opening degree of said throttle valve from its fully opened to its closed position with a opening/closing speed value being equal to that of said second average value while keeping an engine rotation number at a constant value, thereby measuring and storing a series of torque values of said engine corresponding to said opening degree of said throttle valve, 1) repeating step k) while using different rotation numbers, respectively, and m) preparing the map from the torque curves obtained above.

According to an aspect of the present invention an engine or vehicle testing apparatus is provided, comprising a dynamometer connected to an output section of an engine to be tested, a dynamo controller, an actuator for controlling a throttle opening degree of said engine, said dynamo controller and said actuator being controlled by a controlling unit, and temperature adjusting devices, which receive temperature commands based on a temperature pattern to control the temperature profile of said engine during the test, respectively, wherein said temperature pattern is based on data obtained from temperature measurements of different portions of said engine during driving said engine according to a driving pattern.

Said temperature commands may be based on a temperature pattern artificially created.

According to an aspect of the present invention a method is provided for preparing a map to be used for controlling an engine testing apparatus 1 or a vehicle testing apparatus, comprising varying an opening degree of a throttle valve 5' of an engine 2 from its fully closed position to its fully opened position while keeping a rotation speed of said engine 2 at a constant value, thereby measuring and storing a series of torque values of said engine corresponding to said opening degree of said throttle valve 5', repeating the previous step at least two times while using different values of engine rotation speeds, respectively, converting said series of measured torque values into torque curves (a-d) by fitting all measured torque series by approximation procedures, displaying all fitted torque curves in one single X-Y plane, if two of said fitted torque curves intersect, correcting one (c) of the intersecting torque curves (a-d) such in that the corrected torque curve (c') remains positioned next to the closest torque curves (b, d), respectively, however without any intersections, and preparing the map on the basis of above obtained torque curves (a, b, c', d).

Said correcting procedure is may be constituted by artificially setting a value Y1 which is the intersecting point of the torque curve (c) to be corrected with an ordinate of said X-Y plane on a new value Y4 which is defined by the formula |Y4| = (|Y2| + |Y3|)/2, wherein Y2 and Y3 are the intersecting points of that torque curves (c) with said ordinary between which the major part of said torque curve to be corrected is positioned, and by adopting said torque curve (c) to be corrected to said new value Y4 using approximation procedures.

According to an aspect of the present invention a map preparing method is provided which is used for an engine testing apparatus or a vehicle testing apparatus capable of preventing a peculiar driving state from being generated.

Further aspects of the present invention may also be described by the following elucidations:

According to an aspect of the present invention a map preparing method is provided which is used for an engine testing apparatus or a vehicle testing apparatus comprising the steps of: varying a throttle valve from its fully closed position to its fully opened position while keeping rotation of an engine constantly, carrying out operation for storing an output torque Nm at that time using at least three kinds of different engine rotation number, determining each of obtained torque curves A-E as actual machine data, and preparing a map based on the actual machine date, characterized by comprising the steps of: describing each of the torque curves A-E on the same X-Y plane when a map is prepared based on the actual machine data; converting actual machine data function for describing torque approximate curves a-e with respect to throttle opening degrees (X axis) on the same X-Y plane while making approximations to the torque curves; judging whether there exists intersection of torque approximate curves a-e; and automatically correcting one of the torque approximate curves c which can be judged as peculiar such that a value Y1 of y-piece of the torque approximate curve c which is seemed to be peculiar among the intersecting torque approximate curves b, c in the judging step assumes a medium value Y2, Y3 of values of y-pieces of each of the vertically adjacent torque approximate curves b, d.

According to an aspect of the present invention a map preparing method is provided which is used for an engine testing apparatus or a vehicle testing apparatus capable of enhancing the simulation accuracy.

According to an aspect of the present invention a map preparing method is provided which is used for an engine testing apparatus or a vehicle testing apparatus comprising the steps of: calculating an average value in throttle valve opening direction S and an average value in throttle valve closing direction G from variation of the throttle valve operation speed 33; determining the average value of the throttle valve in the throttle valve opening direction S obtained by the calculation as a representative value corresponding to the throttle valve operating in the throttle valve opening direction in a mode driving, operating the throttle valve in its opening direction in a state where the engine rotation number is made constant by this representative value and describing the torque curves 35 with a plurality of different engine rotation number, and preparing a map in the throttle valve opening direction based on the obtained torque curves 35, determining the average value of the throttle valve in the throttle valve closing direction G obtained by the calculation as a representative value corresponding to the throttle valve operating in the throttle valve closing direction in a mode driving, operating the throttle valve in its closing direction in a state where the engine rotation number is made constant by this representative value G and describing the torque curves 36 with a plurality of different engine rotation number, and preparing a map in the throttle valve closing direction based on the obtained torque curves 36.

According to an aspect of the present invention an engine testing apparatus is provided which is capable of carry out a simulation of an actual vehicle running with high accuracy.

According to an aspect of the present invention an engine testing apparatus is provided comprising a dynamometer 3 connected to an output section 2a of an engine 2 under test which is to be tested, a dynamo controller 3' for controlling the dynamometer 3, and an actuator 5 for controlling a throttle opening degree of the engine 2 under test, the dynamo controller 3' and the actuator 5 are controlled to adjust an output of the engine 2 under test, wherein commands based on a temperature pattern 58 obtained based on temperature data of various portions around the engine obtained when an actual vehicle running is tested in accordance with a running pattern on a chassis dynamo from an apparatus for controlling the entire apparatus to various temperature adjusting devices 51 provided around the engine 2 under test.

## Claims

1. An engine or vehicle testing apparatus, comprising:
- a dynamometer (3) connected to an output section (2a) of an engine (2) to be tested,
- a dynamo controller (3'),
- an actuator (5) for controlling a throttle opening degree of said engine (2),
- said dynamo controller (3') and said actuator (5) being controlled by a controlling unit, and
- temperature adjusting devices (51), which receive temperature commands based on a temperature pattern (58) to control the temperature profile of said engine (2) during the test, respectively,
- wherein said temperature pattern (58) is based on data obtained from temperature measurements of different portions of said engine (2) during driving said engine (2) according to a driving pattern.

2. The engine or vehicle testing apparatus according to claim 1,
**characterized in that** said temperature commands are based on a temperature pattern (58) artificially created.
